**Europäisches Patentamt**

**European Patent Office**

**Office européen des brevets**

(11) Veröffentlichungsnummer: **0 344 637 B1**

(12) **EUROPÄISCHE PATENTSCHRIFT**

(45) Veröffentlichungstag der Patentschrift: **25.11.92**

(51) Int. Cl.⁵: **B23K 7/00**

(21) Anmeldenummer: **89109522.6**

(22) Anmeldetag: **26.05.89**

(54) **Verfahren und Vorrichtung zum Bestimmen der Berührungslinie bzw. der Durchdringungslinie zwischen einem Hauptkörper und mindestens einem Nebenkörper für Brennschneiden.**

(30) Priorität: **31.05.88 DE 3818402**

(43) Veröffentlichungstag der Anmeldung:
**06.12.89 Patentblatt 89/49**

(45) Bekanntmachung des Hinweises auf die
Patenterteilung:
**25.11.92 Patentblatt 92/48**

(84) Benannte Vertragsstaaten:
**AT FR GB IT SE**

(56) Entgegenhaltungen:
**DD-A- 213 374       DD-A- 254 154
FR-A- 2 549 406       US-A- 4 349 182
US-A- 4 384 901       US-A- 4 679 722**

**BEFA MITTEILUNGEN, vol. 35, pages 6-9,
02.1984**

(73) Patentinhaber: **Klöckner-Wilhelmsburger
GmbH
Borsigstrasse 24
W-2054 Geesthacht(DE)**

(72) Erfinder: **Noll, Hans
Schlossberger Weg 1
W-4019 Monheim(DE)**

(74) Vertreter: **Röther, Peter, Dipl.-Phys. et al
Patentabteilung, Klöckner-Werke AG, Klöcknerstrasse 29
W-4100 Duisburg 1(DE)**

## Beschreibung

Die Erfindung betrifft Verfahren zum Bestimmen der Berührhungslinie bzw. der Durchdringungslinie zwischen einem Hauptkörper und mindestens einem Nebenkörper für das Brennschneiden, wobei der Hauptkörper und der Nebenkörper sich berühren bzw. durchdringen.

Unter einem Hauptkörper wird im allgemeinen derjenige Körper verstanden, der einen größeren Durchmesser als der andere als Nebenkörper bezeichnete Körper hat. Diese Bezeichnung wird im folgenden beibehalten, wobei es unwesentlich ist, welcher der beiden Körper einen größeren Durchmesser hat. Beide Körper können auch den gleichen Durchmesser aufweisen.

Unter Hauptkörper sind weiterhin Körper zu verstehen, an die der (die) andere(n) Nebenkörper längs der Berührungslinie(n) angeschweißt wird (werden) bzw. längs der Durchdringungslinie engeschweißt wird (werden) bzw. umgekehrt.

Allgemein sind im Rahmen der Erfindung unter Haupt- bzw. Nebenkörpern Deckel für Reaktorbehälter, weiterhin Kessel, Klöpperböden, Rohre für Erdgasleitungen und Rohre, Rohrknoten für Gerüste von Bohrinseln zu verstehen, wobei die einen Körper mit den anderen Körpern wie Rohre, Rohrstutzen und dgl. entlang ihrer Berührungs- bzw. Durchdringungslinie verschweißt werden.

Vor dem Schweißen müssen der Hauptkörper und der Nebenkörper aneinander angepaßt werden, damit sie sich berühren bzw. durchdringen und die Schweißnaht gelegt (gezogen) werden kann.

Bisher ist man beim Brennschneiden der Beruhrungslinien bzw. Durchdringungslinien von mathematischen Körpern (DBP 31 50 971) ausgegangen. So hat man bisher bei Rohren generell einen Kreisquerschnitt vorausgesetzt und im allgemeinen ein erhebliches Nacharbeiten in Kauf genommen, um der Tatsache Rechnung zu tragen, daß in der Praxis Rohre für Erdgasleitungen nicht einmal in erster Näherung einen runden Querschnitt aufweisen.

So fordern beispielsweise die einschlägigen Normen lediglich, daß die Rohre nach Augenmaß gerade sein müssen. d.h., daß implizit weitstreuende Fertigungstoleranzen der Rohre von vornherein hingenommen werden müssen und weiterhin auch der Tatsache, daß es bislang keine reproduzierbaren Meßverfahren gab, um diesen in der Praxis auftretenden Abweichungen von der idealen Gemetrie geometrischer Körper hinreichend genau Rechnung zu tragen.

Entsprechendes gilt für große Behälter, Klöpperböden, usw.

Der Erfindung liegt deshalb die Aufgabe zugrunde, Verfahren der eingangs genannten Art zu schaffen, die mit beliebiger Genauigkeit die Berührungslinie bzw. Durchdringungslinie zwischen einem Hauptkörper und mindestens einem Nebenkörper so zu bestimmen gestatten, daß nach dem Brennschneiden ein Nacharbeiten nicht mehr erforderlich ist.

Die Aufgabe wird gemäß einem ersten Lösungsprinzip dadurch gelöst, daß

a) die gegenseitige raumfeste Anordnung des Hauptkörpers und des Nebenkörpers vorgegeben wird,

b) auf dem Hauptkörper und auf dem Nebenkörper jeweils ein die gemeinsame Berührungslinie bzw. Durch dringungslinie enthaltender Bereich vorgegeben wird,

c) die räumliche Kontur der beiden Bereiche ausgemessen wird,

d) die gemessenen Werte der beiden Konturen in einem Speicher gespeichert werden,

e) unter Einhaltung der gegenseitigen räumlichen Anordnung und unter Berücksichtigung der Wandstärke des Hauptkörpers und/oder des Nebenkörpers die in sich geschlossene gemeinsame Berührungsspur bzw. Durchdringungsspur mit den gespeicherten Werten der beiden Bereiche errechnet wird,

f) mit den errechneten Werten der gemeinsamen Berührungsspur bzw. Durchdringungsspur und dem vorgegebenen Querschnitt der Schweißnaht die gemeinsame Berührungslinie bzw. Durchdringungslinie errechnet und mit diesen errechneten Werten das Brennschneiden gesteuert wird.

In einer weiteren Ausgestaltung der Erfindung wird von einer den beiden Bereichen zugeordneten raumfesten Bezugsebene aus die räumliche Kontur der beiden Bereiche gemessen.

Unter der Berührungsspur ist im Sinne der Erfindung die bandförmige Spur des den Hauptkörper berührenden Nebenkörpers zu verstehen. Dieser Begriff entspricht dem Begriff der Spur in der darstellenden Geometrie, die bekanntlich Körper der Dicke Null zugrunde legt. So entspricht die bandförmige Spur des eine Platte (Hauptkörper) berührenden Hohlzylinders, dessen Achse senkrecht zur Ebene der Platte verläuft, einem kreisförmigen Ring.

Ist der Hauptkörper ebenfalls ein Rohr und schneiden sich die Achsen des Hauptrohres und des Nebenrohres (Nebenkörpers) unter einem Winkel von 90°, dann ist die Berührungsspur ein in sich geschlossenes Band, das in der Mantelfläche des Rohres verläuft und symmetrisch zu der zur Mittelachse des Hauptrohres parallelen Scheitellinie ausgebildet ist, wobei, bezogen auf ein Zylinderkoordinatensystem, dessen Z-Achse mit der Achse des Nebenrohres zu sammenfällt, die Breite des Bandes eine Funktion des Winkels ist und symmetrisch zur R,$\phi$ Ebene ausgebildet wird.

Im Sinne der Erfindung ist unter der Durchdringungsspur die bandförmige Spur des den Hauptkörper durchdringenden Nebenkörpers zu verstehen, die ein in sich geschlossenes auf der Außenfläche des eintauchenden Abschnittes des Nebenkörpers verlaufendes Band ist, dessen Breite vor der jeweiligen Wandstärke des Hauptkörpers vorgegeben ist.

Unter der Berührungslinie ist im Sinne der Erfindung die Berührungsspur abzüglich des vorgegebenen Schweißnahtquerschnittes zu verstehen, entsprechendes ist unter der Durchdringungslinie im Sinne der Erfindung die Durchdringungsspur abzüglich des Schweißnahtquerschnittes zu verstehen, d.h. aufgrund des Schweißnahtquerschnittes wird beim Brennschneiden zusätzlich Material am Hauptkörper und/oder Nebenkörper entfernt.

Die erfindungsgemäße Bestimmung der Berührungs- bzw. der Durchdringungslinie erfolgt somit in völliger Abkehr vom bisherigen Stande der Technik, gemäß dem mathematische Körper vorgegebener Wandstärke zugrunde gelegt werden.

Die Erfindung geht hierbei von der Erkenntnis aus, daß der Verlauf der Berührungslinie bzw. Durchdringungslinie von der Geometrie ihrer Umgebung auf dem Haupt- und Nebenkörper bestimmt wird, in der sie verlaufen. Sie hängt somit lediglich nur von der Oberflächengeometrie des Hauptkörpers und des Nebenkörpers in der Umgebung der Berührungslinie bzw. Durchdringungslinie ab. Falls die Dicke des Hauptkörpers nicht als konstant betrachtet werden kann - in den meisten Fällen ist sie konstant -dann ist auch der Bereich der Durchdringungslinie auf der Innenwandung des Hauptkörpers auszumessen und entsprechend in den Algorithmus für die gespeicherten Daten einzubeziehen.

Erfindungsgemäß wird somit von vornherein darauf verzichtet, für Rohre, Klöpperböden usw. mathematische Körper zugrunde zu legen, wie z.B. geometrisch einfach darstellbare Körper wie Kugelkalotten, Rohre von rundem Querschnitt usw.

So verläuft beispielsweise die Berührungslinie bzw. Durchdringungslinie eines Rohres (rohrförmigen Hohlkörpers) in einem Bereich bzw. in einer Zone, die sich in axialer Richtung über eine gewisse Breite der Außenfläche erstreckt. Diese Breite ist abhängig von den Krümmungsradien des Hauptkörpers und des Nebenkörpers und weiterhin davon, unter welchem Winkel sich die Achse des Hauptkörpers und des Nebenkörpers schneiden, bzw. vom windschiefen Verlauf der beiden Achsen zueinander.

Aufgrund der experimentellen Erfahrungen ist das Fachpersonal ohne weiteres in der Lage beispielsweise bei einem Rohr als Nebenkörper und einer Kugelkalotte als Hauptkörper auf dem Rohr in axialer Richtung eine Zone vorzugeben, der die Berührungs-bzw. Durchdringungslinie völlig enthält. Entsprechend kann auch aufgrund experimenteller Erfahrung der Kugelkalotte ein bandförmiger von mindestens zwei Kreisen begrenzter Bereich markiert werden, innerhalb dessen die Berührungs- bzw. Durchdringungslinie ver läuft, wobei im Prinzip auch in der Weise vorgegangen werden kann, daß die gesamte Kugelkalotte als Bereich betrachtet wird, falls keine entsprechenden experimentellen Erfahrungen bzw. Voraussagen moglich sein sollten, was jedoch in der Praxis im allgemeinen auszuschließen ist.

Denn es ist ohne weiteres mittels der elementaren,darstellenden bzw. analytischen Geometrie möglich, einen derartigen zylinderförmigen Abschnitt auf einem Rohr und einen in sich geschlossenen bandförmigen Ringbereich auf der Kugelkalotte vorzugeben.

Entsprechendes gilt für beliebige Hauptkörper und Nebenkörper.

Nach Vorgabe der beiden Bereiche wird ihre räumliche Kontur bestimmt. So werden beispielsweise von einer raumfesten Bezugsebene aus berührungslos mittels Ultraschall bzw. Laserstrahlen die Abstände von dieser Ebene aus auf diese beiden Bereiche gemessen. Die gemessenen Werte der jeweiligen Kontur der beiden Bereiche werden in einem Rechner gespeichert. Nach der Methode der finiten Elemente wird unter Einhaltung der vorgegebenen gegenseitigen räumlichen Anordnung und unter Berücksichtigung der Wandstärke des Nebenkörpers und des Hauptkörpers dann die in sich geschlossene gemeinsame Berührungsspur bzw. Durchdringungsspur aus den gespeicherten Werten der beiden Bereiche errechnet. Generell wird so vorgegangen, daß zur Bestimmung der Berührungslinie bzw. Durchdringungslinie diejenigen gespeicherten Werte aus den die Körper repräsentierenden Bereichenausgewählt werden, die sowohl dem Hauptkörper als auch dem Nebenkörper zugeordnet sind, d.h. es wird im Grunde genommen der Durchschnitt der gespeicherten Werte bestimmt, die sowohl dem ersten als auch dem zweiten Bereich zugehören.

Gemäß einem zweiten Lösungsprinzip wird die Aufgabe dadurch gelöst, daß

a) die gegenseitige raumfeste Anordnung des Hauptkörpers und des Nebenkörpers vorgegeben werden,

b) auf dem Hauptkörper und auf dem Nebenkörper jeweils ein die gemeinsame Berührungsbzw. Durchdringungslinie enthaltender Bereich vorgegeben wird,

c) die räumliche Kontur der Bereiche ausgemessen wird,

d) die gemessenen Werte der beiden Konturen in einem Speicher gespeichert werden,

e) unter Einhaltung der gegenseitigen räumlichen Winkellage die durch die gemessenen Werte repräsentierten beiden Bereiche im Speicher bis zur Berührung zueinander verschoben werden, unter weiterer Einhaltung der gegenseitigen räumlichen Winkellage jeweils um einen vorgegebenen Betrag so lange zueinander verschoben und die den beiden Bereichen gemeinsamen Werte bestimmt werden, bis durch die den beiden Bereichen gemeinsamen Werte eine in sich geschlossene gemeinsame Berührungsspur bzw. Durchdringungsspur errechnet ist,

f) mit den errechneten Werten der gemeinsamen Berührungsbzw. Durchdringungsspur und dem vorgegebenen Querschnitt der Schweißnaht die gemeinsame Berührungslinie bzw. Durchdringungslinie errechnet wird und mit diesen errechneten Werten das Brennschneiden gesteuert wird.

Ist zur Veranschaulichung der Hauptkörper ein Rotationsparaboloid, von vorgegebener Wandstärke, der Nebenkörper ein Rohr von elliptischem Querschnitt und vorgegebener Wandstärke,dessen Achse unter einem vorgegebenen Winkel die Achse des Hauptkörpers schneiden soll und wobei beide Körper einander durchdringen sollen, dann ist es ohne weiteres verständlich, daß bei raumfester Orientierung des Hauptkörpers und bei entsprechender fixierter Winkelstellung des Nebenkörpers mit seiner Achse zur Achse des Hauptkörpers der Nebenkörper parallel zu seiner Achse (Hauptachse des Rohres) so lange verschoben in Richtung zum Hauptkörper werden kann, bis er mit einer Stelle seines Umfangs die Oberfläche des Hauptkörpers berührt.

Es ist ohne weiteres verständlich, daß dieser Kontaktpunkt zunächst als Bezugspunkt genommen werden kann.

Dieser Kontaktpunkt kann zudem als Anhaltspunkt dafür genommen werden, um den in sich geschlossenen ringförmigen Bereich auf dem Hauptkörper festzulegen, innerhalb dessen die Berührungsbzw. Durchdringungsspur verläuft. Aufgrund einfacher elementargeometrischer Betrachtungen kann nun ohne weiteres abgeschätzt werden, welche Höhe der Abschnitt auf der Mantelfläche des Rohres hat, innerhalb deren die Berührungsspur bzw. die Durchdringungsspur verlaufen wird.

Entsprechendes gilt für den in sich geschlossenen bandförmigen Bereich auf dem Rotationsparaboloid.

Entsprechend wie beim ersten Lösungsprinzip werden die beiden Bereiche des Hauptkörpers und des Nebenkörpers ausgemessen, indem beispielsweise wie bei dem ersten Lösungsprinzip von einer raumfesten Bezugsebene aus die geometrische Gestalt dieser Bereiche abgetastet wird und die gemessenen Werte in dem Speicher gespeichert werden, die dann nach der Methode der finiten Elemente die beiden Bereiche repräsentieren. Auf einem Display ist es ohne weiteres möglich, diese beiden Bereiche als Computerbilder darzustellen. Es ist weiterhin ohne weiteres möglich und aufgrund der üblichen Software der bekannten Rechner auf dem Display den Bereich des Nebenkörpers parallel zu seiner Achse so lange zu verschieben, bis die Berührungsspur bzw. die Durchdringungsspur in sich geschlossen ist.

Bei der Bestimmung der in sich geschlossenen Durchdringungsspur ergibt sich ein ringartiger Körper, dessen finiten Elemente sowohl zu dem das Nebenrohr repräsentierenden Bereich als auch dem das Hauptrohr repräsentierenden Bereich angehören (Durchschnittsmenge). Der Abschnitt der äußeren Umhüllung dieses ringartigen Körpers repräsentiert die Durchdringungsspur des Hauptkörpers und des Nebenkörpers. Im allgemeinen ist erwünscht, daß die Stirnfläche des in den Hauptkörper eingesetzten Körpers sich der Innenwandung des Hauptkörpers anschmiegt (bündiger Verlauf). In diesem Falle werden die Werte der Stirnfläche bestimmt, die sowohl Meßwerte des Hauptkörpers als auch des Nebenkörpers repräsentieren.

Nach der Bestimmung der Durchdringungsspur wird noch der Schweißspalt berücksichtigt, d.h. es wird in Umfangsrichtung dieses Ringkörpers stets senkrecht zu den einzelnen Tangentialebenen an die einzelnen Punkte der gemeinsamen Punkte der Außenfläche nach der Methode der finiten Elemente entsprechend diesem Schweißspalt eine entsprechende Fläche und ggf. auch noch die Schweißfuge berücksichtigt und dann die Durchdringungslinie errechnet. Anhand dieser errechneten Werte, wird dann durch Brennschneiden die Durchdringungslinie geschnitten, wobei die Verlängerung der Achse des Schneidbrenners so geführt ist, daß sie die errechnete Durchdringungslinie auf der Innenwandung des Hauptkörpers schneidet. Der Pendelpunkt kann auch anders gelegt werden. Entsprechendes gilt für die Berührungslinie.

In einer weiteren Ausgestaltung der Erfindung wird bei einer Abweichung des Querschnitts der errechneten Berührungs- bzw. Durchdringungslinie von einer vorgegebenen Toleranz durch weiteres Verschieben der beiden Bereiche so lange die Berührungs- bzw. Durchdringungslinie errechnet, bis die Abweichungen innerhalb der vorgegebenen Toleranz liegen.

Die Erfindung ist anhand von Ausführungsbeispielen in der Zeichnung näher erläutert.

Es zeigen:

Figur 1 in perspektivischer Ansicht und in Explosionsdarstellung eine Kugelkalotte (Hauptkörper) und ein Rohr (Nebenkörper),

Figur 2 im Schnitt einen Ausschnitt aus Figur 1 des vom Nebenkörper durchdrungenen Hauptkörpers,

Figur 3 in der Darstellung der Figur 2 die Berührung des Hauptkörpers durch den Nebenkörper, Figur 4 und 5 Meßvorrichtungen zur weiteren Erläuterung der Verfahren.

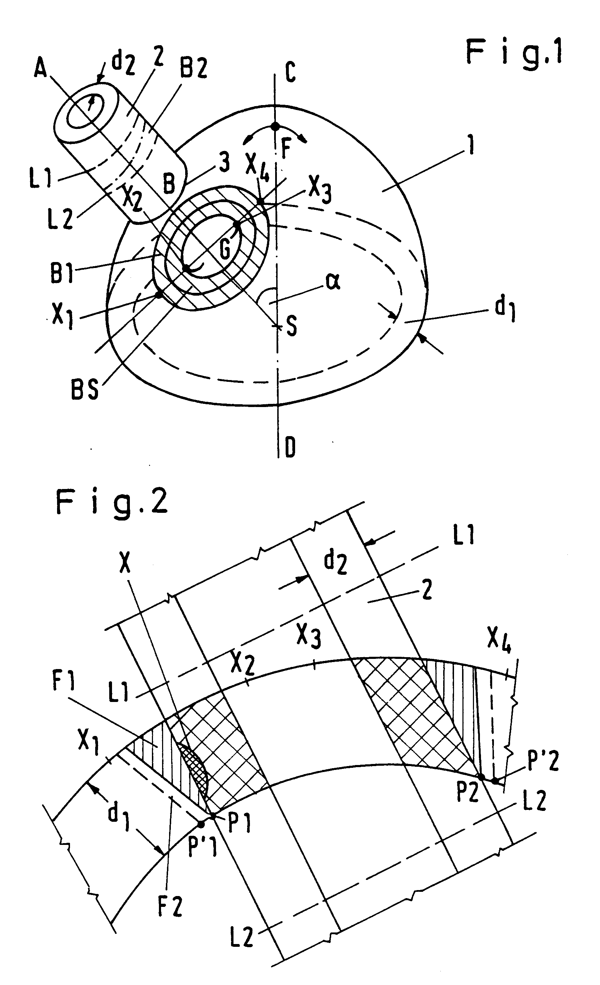

In Figur 1 ist in perspektivischer Ansicht eine mit 1 bezeichnete Kugelkalotte (Hohlkörper) dargestellt, deren Wandstärke $d_1$ beträgt, und deren Rotationsachse mit C-D bezeichnet ist. Der Durchstoß punkt der Achse durch die Oberfläche (Außenkontur) der Kugelkalotte ist mit F bezeichnet.

Das Rohr 2 weist eine Wandstärke $d_2$ auf und ist mit seiner unteren Stirnfläche 3 distanziert zur Oberfläche der Kugelkalotte angeordnet. Die Achse des Rohres ist mit A-B bezeichnet, ihr Durchstoßpunkt durch die Oberfläche der Kugelkalotte mit G. Sie schneidet die Achse der Kugelkalotte im Schnittpunkt S und schließt mit ihr den Winkel $\alpha$ ein.

Auf der Kugelkalotte ist ein in sich geschlossener bandförmiger Bereich $B_1$ straffiert dargestellt, in dem die in sich geschlossene, ebenfalls bandförmige Durchdringungsspur BS eingezeichnet ist.

Auf der Außenwandung (Außenkontur) des Rohres verläuft in der Zone zwischen den beiden zur Achse senkrechten Linien L1 und L2 die schematisch strichpunktiert dargestellte Durchdringungsspur auf der Mantelfläche des Rohres (Bereich 2).

Mit $X_1$, $X_2$ und $X_3$, $X_4$ sind die Schnittpunkte einer durch die Achse C-D gelegten Ebene mit dem bandförmigen Bereich bezeichnet.

Die Figur 2 zeigt im Schnitt einen Ausschnitt aus Figur 1, wobei $X_1$, $X_2$ und $X_3$, $X_4$ ebenfalls als Schnittpunkte des in sich geschlossenen bandförmigen Bereiches auf der Kugelkalotte mit dieser Schnittebene eingezeichnet sind.

In Figur 2 taucht das Nebenrohr in der Weise in die Kugelkalotte ein, daß es über die Innenwandung der Kugelkalotte vorsteht.

Eingezeichnet sind weiterhin die Linien L1 und L2, die den Bereich auf dem Nebenrohr begrenzen, in dem die Durchdringungsspur verläuft. Nachdem die Kontur des Hauptkörpers und des Nebenkörpers in den Bereichen B1 und B2 gemessen ist (weiter unten erläutert), diese Werte als Speicherwerte für die Be rechnung der Durchdringungsspur gespeichert sind, wird entsprechend bekannter mathematischer Algorithmen mit einem Rechner zunächst nach der Methode der finiten Elemente der ringförmige Bereich bestimmt, dessen Werte dem Bereich des Hauptkörpers und auch dem Bereich des Nebenkörpers gemeinsam sind (Bildung der Durchschnittsmenge). Dieser Bereich ist in etwa ein hohlzylinderartiger Ringkörper, dessen Schnitt in Figur 2 kreuzstraffiert dargestellt ist. Es ist ohne weiteres ersichtlich, daß die Außenkontur dieses Körpers der Durchdringungsspur zwischen dem Hauptkörper und dem Nebenkörper entspricht.

Zur Bestimmung der Durchdringungslinie wird nun in der Weise vorgegangen, daß nach der Methode der finiten Elemente auf der Außenkontur dieses hohlzylinderartigen Ringkörpers mit den gemeinsamen Werten für die beiden Bereiche Tangentialebenen an diesen Ringkörper gelegt und in vorgegebenen Punkten die Normalebenen errichtet werden und dann weiterhin in diesen Normalebenen jeweils wie aus Figur 2 ersichtlich, dem Querschnitt F des Schweißspaltes in der betreffenden Normalebene entsprechende Flächen errechnet werden, so daß wie aus Figur 2 ersichtlich, aus dem etwa zylinderförmigen Ringkörper ein konusartiger Ringkörper gebildet wird, wobei dann jeweils die Schnittpunkte der Hypotenuse dieser dem Schweißspalt im vorliegenden Beispiel entsprechenden Dreiecke mit der äußeren Umrandung des hohlzylinderförmigen Ringkörpers jeweils Schnittpunkte P1, P2 usw. ergeben, die mit den Pendelpunkten des Schweißbrenners für diese Stelle identisch sind, falls kein Schweißspalt vorgesehen sein soll.

Für den Fall, daß noch zusätzlich ein Schweißspalt vorgesehen ist, wird die Hypotenuse dieses den Schweißspalt repräsentierenden Dreiecks parallel zu sich unter Überstreichen der Fläche F2 verschoben, so daß der Punkt P1 in P'1 und der Punkt P2 in P'2 entsprechend übergeht. Die Linie der die Punkte P1, P2 usw. bzw. P'1, P'2 usw. verbindenden Linie entspricht dem Pendelpunkt.

Entsprechendes gilt bei einer K-Naht usw.

Im allgemeinen ist es jedoch unerwünscht. daß der Nebenkörper mit seiner Stirnfläche über die Innenwandung des Hauptkörpers hervorragt. In diesem Fall wird in der Weise vorgegangen, daß die Stirnfläche des Ringkörpers bzw. des konusartigen in sich geschlossenen Körpers bestimmt wird, die gegeben ist durch die Punkte, die der Innenwandung, der Kugelkalotte und der Stirnfläche des Nebenrohres in der gezeichneten Stellung gemeinsam sind (Durchschnittsmenge).

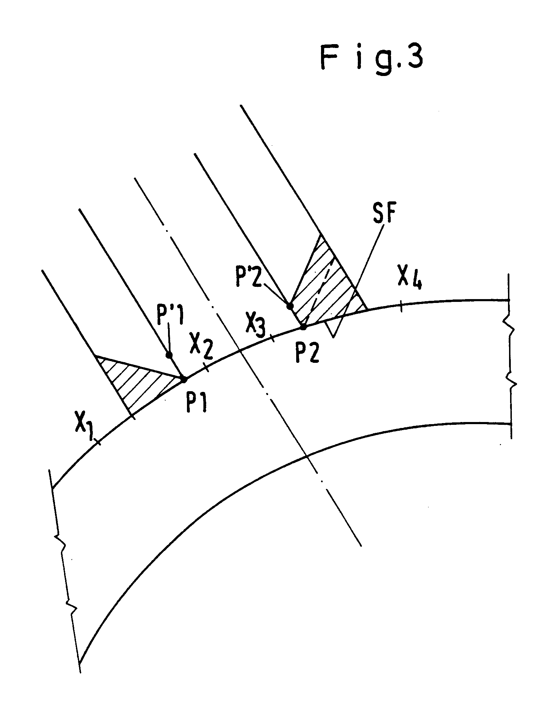

Figur 3 zeigt in der Darstellung der Figur 2 die Bestimmung der Berührungslinie zwischen dem Hauptkörper (Rohr) und dem Hauptkörper (Kugelkalotte).

Es wird in der gleichen Weise zunächst vorgegangen wie in der Figur 2, wobei ebenfalls der in sich geschlossene leicht deformierte hohlzylinderförmige ebenfalls kreuzstraffierte Körper bestimmt wird, der die Punkte enthält, die sowohl dem Bereich des Hauptkörpers als auch dem Bereich des Nebenkörpers gemeinsam sind (Bildung der Durchschnittsmenge). In Abwandlung der Figur 2 wird die Stirnfläche SF dieses Körpers bestimmt, der die Punkte enthält, die der Außenkontur der Kugelkalotte und dem Rohr gemeinsam sind. Anschließend wird in der gleichen Weise wie bei Figur 2 die Schweißfuge unter Beachtung des Schweißspaltes bestimmt, so daß sich entsprechend wie in Figur 2 die Punkte P1, P2 bzw. P'1 und P'2 ergeben, die die Punkte P1, P2 usw. bzw. P'1, P'2 usw. verbindende in sich geschlossene Linie entspricht der Durchdringungslinie und fällt mit dem Pendelpunkt des Schweißbrenners für das Legen der Schweißnaht zwischen dem Rohr und der Kugelkalotte zusammen, falls der Pendelpunkt nicht anders verlaufen soll.

Falls wie in Figur 2 schematisch dargestellt, das Rohr im Durchdringungsbereich eine Einbuchtung X hat, ergibt sich ohne weiteres, daß anschließend die Schweißnaht eine größere Querschnittsfläche hat als ohne eine derartige Einbuchtung. Falls die gesamte Querschnittsfläche an dieser Stelle einen vorgegebenen Toleranzwert überschreitet, wird mit Hilfe des Rechners das Nebenrohr weiter in die Kugelkalotte eintauchen lassen, d.h. parallel zu seiner Achse A-B verschoben und die gesamte Berechnung erneut durchgeführt, und zwar so lange, bis an allen Stellen etwaige Einbuchtungen bzw. Ausbuchtungen allgemein gesprochen Unregelmäßigkeiten des Nebenkörpers und auch des Hauptkörpers bei der Bildung der Schweißnaht, deren Querschnittsfläche durch das erfindungsgemäße Verfahren vorausbestimmt wird, einen vorgegebenen Toleranzwert nicht über-bzw. unterschreitet.

Dieses Verfahren ist universell anwendbar. es kann bei allen möglichen Schweißnähten beispielsweise bei K-Nähten usw. durchgeführt werden.

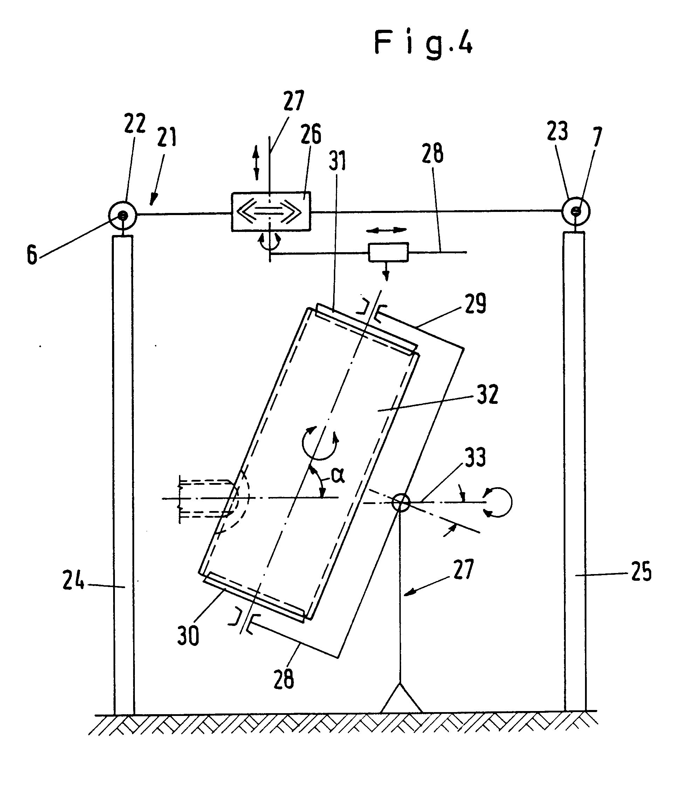

Figur 4 zeigt eine Vorrichtung zur Durchführung der Verfahren für den Hauptkörper bzw. Nebenkörper. Die Vorrichtung weist zur Festlegung einer raumfesten Ebene $E_0$ ein Kreuzsupport 21 auf, das senkrecht zur Zeichenebene auf zwei Schienen 22 und 23 verfahrbar ist. Die Schienen 6 und 7 sind auf einem Gerüst angeordnet von dem lediglich die vorderen lotrechten Pfosten 24 und 25 sichtbar sind, während die beiden hinteren Pfosten verdeckt sind. In dem Support ist in dessen Ebene ein Schlitten 26 in Richtung des Doppelpfeiles zwangsgeführt. Der Schlitten weist eine lotrechte Welle 27 mit einem in radialer Richtung zeigenden Arm 28 auf, auf dem eine Vorrichtung zum Erfassen der geometrischen Konfiguration des Hauptkörpers bzw. des Nebenkörpers dim Bereich der Durchdringungslinie angeordnet ist.

Innerhalb des Portalrahmens ist die Dreh- und Kippeinrichtung 27 angeordnet, die an sich bekannt ist.

Der Tisch der Dreh- und Kippeinrichtung weist zwei Schwingen 28 und 29 auf, in der mittels der beiden Klemmbacken 30 und 31 im vorliegenden Falle das Hauptrohr 32 eingespannt ist, und um seine Achse verdrehbar in vorgegebene Winkellagen arretiert werden kann. Die Dreh- und Kippeinrichtung ist um ihre Achse 33 und andererseits senkrecht um diese Achse 33 verschwenkbar. Falls die Achse des Hauptrohres und die Achse des Nebenrohres einen Winkel α einschließen, wird die Dreh-und Kippeinrichtung so verschwenkt, daß die Achse des Hauptrohres mit der Horizontalen den Winkel α einschließt.

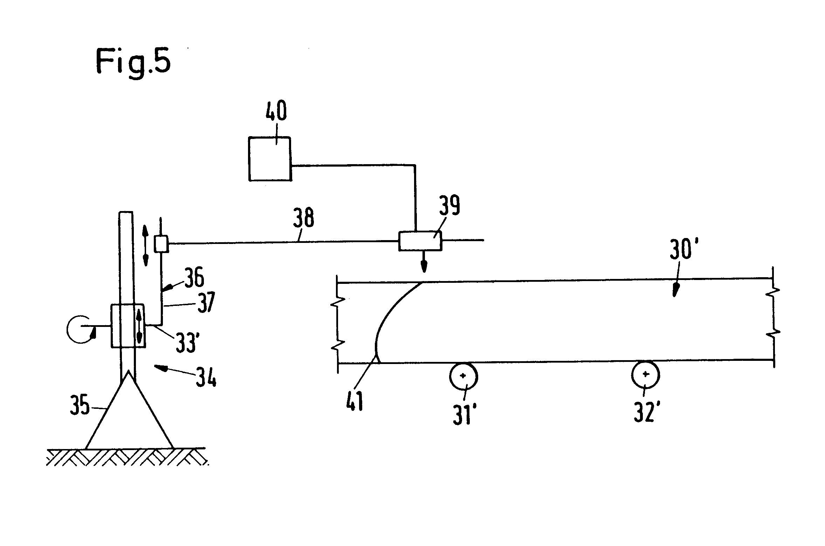

Figur 5 zeigt eine Vorrichtung zur Durchführung des Verfahrens für das Nebenrohr. Die Kontur des Bereichs kann auch mittels der Vorrichtung nach Figur 4 erfolgen.

Das Nebenrohr ist in Figur 5 mit 30' bezeichnet und ist auf den Rollen 31' und 32' derart gelagert, daß seine strichliert einge-zeichnete Achse mit der Achse 33' einer Vorrichtung 34 fluchtet, die zur Bestimmung der Oberflächengeometrie des Nebenrohres dient. Diese Vorrichtung 34 weist einen Ständer 35 für die Achse 33 auf, auf der um 360° verschwenkbar ein L-Profil 36 mit seinem Schenkel 37 gelagert ist, dessen anderer Schenkel parallel zur Achse des Nebenrohres verläuft und einen vorgebbaren Abstand zum Außenmantel des Nebenrohres hat. Im Schenkel 38 ist verschiebbar die Meßeinrichtung 39 geführt, die die Lote auf die Mantelfläche des Nebenrohres fällt, die in einem angeschlossenen Speicher 40 abgespeichert werden. Die äußere Geometrie des Rohres wird in dem Bereich bestimmt, in dem die Durchdringungslinie. die schematisch mit 41 bezeichnet ist, verlaufen wird.

Der Verlauf der Durchdringungslinie kann an dem Nebenrohr vorab bestimmt werden, falls der von den Achsen des Haupt- und Nebenrohres eingeschlossene Winkel bekannt ist.

Durch die erfindungsgemäßen Maßnahmen wird erreicht, daß die Berührungs- bzw. Durchdringungslinien für Haupt- und Nebenkörper beliebiger tatsächlicher geometrischer Gestalt bestimmt werden kann, wobei Unregelmäßigkeiten ohne weiteres mit beliebiger Genauigkeit erfaßt werden können, die lediglich von der Feinheit der Zelleneinteilung der finiten Elemente bestimmt ist.

**Patentansprüche**

1. Verfahren zum Bestimmen der Berührungslinie bzw. Durchdringungslinie zwischen einem Hauptkörper und mindestens einem Nebenkörper für das Brennschneiden, wobei der Hauptkörper und der Nebenkörper sich berühren bzw. sich durchdringen, dadurch gekennzeichnet, daß

a) die gegenseitige raumfeste Anordnung des Hauptkörpers und des Nebenkörpers vorgegeben werden,

b) auf dem Hauptkörper und auf dem Nebenkörper jeweils ein die gemeinsame Berührungslinie bzw. Durchdringungslinie enthaltender Bereich vorgegeben wird,

c) die räumliche Kontur der beiden Bereiche ausgemessen wird,

d) die gemessenen Werte der beiden Konturen in einem Speicher gespeichert werden,

e) unter Einhaltung der gegenseitigen räumlichen Anordnung und unter Berücksichtigung der Wandstärke des Hauptkörpers und/oder des Nebenkörpers die in sich geschlossene gemeinsame Berührungsspur bzw. Durchdringungsspur aus den gespeicherten Werten der beiden Bereiche errechnet wird,

f) mit den errechneten Werten der gemeinsamen Berührungsbzw. Durchdringungsspur und dem vorgegebenen Querschnitt der Schweißnaht die gemeinsame Berührungslinie bzw. Durchdringungslinie errechnet und mit diesen errechneten Werten das Brennschneiden gesteuert wird.

**2.** Verfahren nach Anspruch 1,
dadurch gekennzeichnet,
daß von einer den beiden Bereichen zugeordneten raumfesten Bezugsebene aus die räumliche Kontur der beiden Bereiche errechnet wird.

**3.** Verfahren zum Bestimmen und Brennschneiden der gemeinsamen Berührungslinie bzw. Durchdringungslinie zwischen einem Hauptkörper und mindestens einem Nebenkörper dadurch gekennzeichnet, daß

a) die gegenseitige raumfeste Anordnung des Hauptkörpers und des Nebenkörpers vorgegeben werden,

b) auf dem Hauptkörper und auf dem Nebenkörper jeweils die Umrandung eines die gemeinsame Berührungslinie bzw. Durchdringungslinie enthaltenden Bereiches vorgegeben wird,

c) die räumliche Kontur der beiden Bereiche ausgemessen wird,

d) die gemessenen Werte der beiden Konturen in einem Speicher gespeichert werden,

e) unter Einhaltung der gegenseitigen räumlichen Winkellage die durch die gemessenen Werte repräsentierten beiden Bereiche im Speicher bis zur Berührung zueinander verschoben werden, unter weiterer Einhaltung der gegenseitigen räumlichen Winkellage jeweils um einen vorgegebenen Betrag lo lange zueinander verschoben und die den beiden Bereichen gemeinsamen Werte bestimmt werden bis durch die den beiden Bereichen gemeinsamen Werte eine in sich geschlossene gemeinsame Berührungsspur bzw. Durchdringungsspur errechnet ist,

f) mit den errechneten Werten der gemeinsamen Berührungsbzw. Durchdringungsspur und dem vorgegebenen Querschnitt der Schweißnaht die gemeinsame Berührungslinie bzw. Durchdringungslinie errechnet wird und mit diesen errechneten Werten das Brennschneiden gesteuert wird.

**4.** Verfahren nach Anspruch 2,
dadurch gekennzeichnet,
daß bei einer Abweichung des Querschnitts der errechneten Berührungs- bzw. Durchdringungslinie von einer vorgegebenen Toleranz durch weiteres Verschieben der beiden Bereiche so lange die Berührungs- bzw. Durchdringungslinie errechnet wird, bis die Abweichungen innerhalb der vorgegebenen Toleranz liegen.

## Claims

**1.** Method of determining the contact line or penetration line between a main body and at least one secondary body for flame cutting, where the main body and the secondary body come into contact with one another or penetrate one another,
characterized in that

a) the mutual spatially fixed arrangement of the main body and of the secondary body are predetermined,

b) a respective region containing the common contact line or penetration line is predetermined on the main body and on the secondary body,

c) the spatial contour of the two regions is measured,

d) the measured values of the two contours are stored in a memory,

e) the common contact trace or penetration trace, which is continuous, is calculated from the stored values of the two regions while maintaining the mutual spatial arrangement and while taking into account the wall thickness of the main body and/or of the secondary body,

f) the common contact line or penetration line is calculated using the calculated values of the common contact or penetration trace and the predetermined cross-section of the weld seam and flame cutting is controlled by these calculated values.

**2.** Method according to Claim 1,
characterized
in that the spatial contour of the two regions is calculated from a spatially fixed reference plane associated with the two regions.

3. Method of determining and flame cutting the common contact line or penetration line between a main body and at least one secondary body, characterized in that

a) the mutual spatially fixed arrangement of the main body and of the secondary body are predetermined,

b) the respective edge of a region containing the common contact line or penetration line is predetermined on the main body and on the secondary body,

c) the spatial contour of the two regions is measured,

d) the measured values of the two contours are stored in a memory,

e) while maintaining the mutual spatial angular position the two regions in the memory which are represented by the measured values are displaced towards one another until they come into contact, are respectively displaced towards one another by a predetermined amount while further maintaining the mutual spatial angular position, and the values common to the two regions are determined, until a common contact trace or penetration trace, which is continuous, has been calculated using the values common to the two regions,

f) the common contact line or penetration line is calculated using the calculated values of the common contact or penetration trace and the predetermined cross-section of the weld seam and flame cutting is controlled by these calculated values.

4. Method according to Claim 2, characterized in that in the case of a deviation in the cross-section of the calculated contact or penetration line from a predetermined tolerance, the contact or penetration line is calculated by further displacing the two regions until the deviations lie within the predetermined tolerance.

**Revendications**

1. Procédé pour déterminer la ligne de contact ou la ligne de pénétration entre un corps principal et au moins un corps auxiliaire pour le découpage au chalumeau, le corps principal et le corps secondaire se touchant ou se pénétrant, **caractérisé** en ce que

a) on prédétermine la disposition relative spatialement fixe du corps principal et du corps auxiliaire,

b) on prédétermine, respectivement sur le corps principal et sur le corps auxiliaire, une zone contenant la ligne de contact ou ligne de pénétration commune,

c) on mesure le contour spatial des deux zones,

d) on enregistre les valeurs mesurées des deux contours dans une mémoire,

e) en respectant la disposition spatiale relative et en tenant compte de l'épaisseur de paroi du corps principal et/ou du corps auxiliaire, on calcule, à partir des valeurs mémorisées des deux zones, la trace de contact ou trace de pénétration commune, en soi fermée,

f) avec les valeurs calculées de la trace de contact ou trace de pénétration commune et avec la section prédéterminée du cordon de soudure, on calcule la ligne de contact ou ligne de pénétration commune, et on commande le découpage au chalumeau avec ces valeurs calculées.

2. Procédé selon la revendication 1, **caractérisé** en ce qu'on calcule le contour spatial des deux zones à partir d'un plan de référence spatialement fixe associé aux deux zones.

3. Procédé pour déterminer et découper au chalumeau la ligne de contact ou la ligne de pénétration commune entre un corps principal et au moins un corps auxiliaire, **caractérisé** en ce que

a) on prédétermine la disposition relative spatialement fixe du corps principal et du corps auxiliaire,

b) on prédétermine, respectivement sur le corps principal et sur le corps auxiliaire, la bordure d'une zone contenant la ligne de contact ou ligne de pénétration commune,

c) on mesure le contour spatial des deux zones,

d) on enregistre les valeurs mesurées des deux contours dans une mémoire,

e) en respectant la position angulaire spatiale relative, on décale l'une vers l'autre les deux zones représentées par les valeurs mesurées dans la mémoire jusqu'à ce qu'elles se touchent, puis, en continuant à tenir compte de la position angulaire spatiale relative, on les décale l'une vers l'autre, chaque fois d'un montant prédéterminé, et on détermine les valeurs communes aux deux zones, jusqu'à ce qu'une trace de contact ou trace de pénétration commune, en soi fermée, soit calculée par les valeurs communes aux deux zones.

f) avec les valeurs calculées de la trace de contact ou trace de pénétration commune et avec la section prédéterminée du cordon de soudure, on calcule la ligne de contact ou ligne de pénétration commune, et on commande le découpage au chalumeau avec ces valeurs calculées.

4. Procédé selon la revendication 2, **caractérisé** en ce qu'en cas d'un écart de la section de la ligne de contact ou de pénétration calculée par rapport à une tolérance prédéterminée, on calcule la ligne de contact ou de pénétration, en décalant à nouveau les deux zones, jusqu'à ce que les écarts se trouvent à l'intérieur de la tolérance prédéterminée.

Fig.1

Fig.2

F i g.3

# Fig.4

Fig.5

EP 0 344 637 B1